(19) Europäisches Patentamt
European Patent Office
Office européen des brevets

(11) **EP 4 533 966 A1**

(12) **EUROPEAN PATENT APPLICATION**
published in accordance with Art. 153(4) EPC

(43) Date of publication:
09.04.2025 Bulletin 2025/15

(21) Application number: 22947745.0

(22) Date of filing: 14.12.2022

(51) International Patent Classification (IPC):
*A24F 40/40* (2020.01)    *B32B 27/06* (2006.01)
*B32B 9/06* (2006.01)    *B32B 15/12* (2006.01)
*B32B 15/20* (2006.01)    *B32B 27/10* (2006.01)
*A24C 5/01* (2020.01)    *A24C 5/46* (2006.01)

(86) International application number:
PCT/CN2022/138885

(87) International publication number:
WO 2023/246010 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.06.2022 CN 202210711777

(71) Applicant: New Flame Intelligent Manufacturing
(Shenzhen) Co., Ltd.
Shenzhen, Guangdong 518000 (CN)

(72) Inventors:
• WEN, Yuqing
  Shenzhen, Guangdong 518000 (CN)
• WEN, Zhiyong
  Shenzhen, Guangdong 518000 (CN)
• YUAN, Huajun
  Shenzhen, Guangdong 518000 (CN)

(74) Representative: Huang, Liwei
Cäcilienstraße 12
40597 Düsseldorf (DE)

(54) **PLUG END WRAP PAPER OF HEAT-NOT-BURN CIGARETTE, SEALING DEVICE AND VAPING DEVICE**

(57)     A plug end wrap paper (7) of a heat-not-burn cigarette (6), a sealing device and a vaping device. The plug end wrap paper (7) comprises a sealing round paper sheet which can be easily punctured by a heating needle, the sealing round paper sheet being provided with a plurality of micropores, the diameter of the micropores being smaller than the diameter of smoke generation particles of the heat-not-burn cigarette (6), and the sealing round paper sheet comprising a sealing round paper sheet body (100). The plug end wrap paper (7) further comprises: a functional layer arranged on the outer side or the inner side of the sealing round paper sheet body (100). The functional layer comprises: an antibacterial layer (200), arranged on the outer side of the sealing round paper sheet body (100); a waterproof layer (300) and a high-temperature-resistant layer (400), the outer side of the sealing round paper sheet body (100) being sequentially provided with the high-temperature-resistant layer (400) and the waterproof layer(300); and a flame-retardant layer (500), arranged on the inner side of the sealing round paper sheet body (100). The functional layer comprises: an antibacterial layer (200), arranged on the outer side of the sealing round paper sheet body (100); a waterproof layer (300) and a high-tempera- ture-resistant layer (400), the outer side of the sealing round paper sheet body (100) being sequentially provided with the high-temperature-resistant layer (400) and the waterproof layer (300); and a flame-retardant layer (500), arranged on the inner side of the sealing round paper sheet body (100).

Fig. 1

EP 4 533 966 A1

## Description

### CROSS-REFERENCE TO RELATED APPLICATIONS

This application claims the benefit of Chinese Application No. 2022107117773, filed Jun. 22, 2022. The Application No. 2022107117773 is hereby incorporated by reference in its entirety.

### TECHNICAL FIELD

The invention relates to the field of heat-not-burn cigarettes, in particular to a plug end wrap paper, a sealing device and a vaping device for the heat-not-burn cigarettes.

### BACKGROUND

The heat-not-burn cigarette is a type of cigarette which is made by heating a tobacco substance by an electronic heating device without burning that tobacco substance. Fire is not used during smoking, so as not to produce cigarette ash, making the cigarette environment-friendly. When the electronic heating device is used for smoking this type of cigarette, not only can the consumer feel the aroma of the tobacco, but also the harmful substances generated by the high-temperature pyrolysis can be significantly reduced during burning the cigarette, thereby providing the consumer with an effective and healthy smoking mode, which is more and more popular with the consumers.

The application CN 112641135 B by the present inventor has disclosed a plug end wrap paper dedicated to preventing falling of smoke generation particles of the heat-not-burn cigarette. In the application, the sealing round paper sheet is provided with a plurality of micropores, so that the air permeability is increased, and when the smoke generation particles are heated by a heating needle, the external air enters the cigarette, which is beneficial to the smoke generation and circulation of the smoke generation particles. However, the plug end wrap paper in the application only has a single function to increase the air permeability by providing a plurality of micropores, and does not have other functions (such as antibacterial function, or waterproof function, or high temperature resistance function, etc.), which is not conducive to further improving the use experience of the heat-not-burn cigarette.

### SUMMARY

The invention provides a plug end wrap paper for heat-not-burn cigarettes, a sealing device and a vaping device, which are used for addressing the technical problems in the prior art.

To address the above mentioned technical problems, the invention discloses a plug end wrap paper of a heat-not-burn cigarette, comprising a sealing round paper sheet which can be easily punctured by a heating needle, the sealing round paper sheet being provided with a plurality of micropores, the diameter of the micropores being smaller than the diameter of smoke generation particles of the heat-not-burn cigarette, and the sealing round paper sheet being characterized by comprising a sealing round paper sheet body, and further comprising: a functional layer arranged on the outer side or the inner side of the sealing round paper sheet body.

Preferably, the functional layer comprises an antibacterial layer, arranged on the outer side of the sealing round paper sheet body.

Preferably, the functional layer comprises: a waterproof layer and a high-temperature-resistant layer. The high-temperature-resistant layer and the waterproof layer are sequentially arranged on the outer side of the sealing round paper sheet body.

Preferably, the functional layer further comprises: a flame-retardant layer, arranged on the inner side of the sealing round paper sheet body.

Preferably, a sealing device for any the plug end wrap paper of the heat-not-burn cigarette as described above, comprising:

a coating mechanism for coating an adhesive on the end of the heat-not-burn cigarette close to the smoke generation particles;
a pressing mechanism for pressing the plug end wrap paper of the heat-not-burn cigarette to the end of the heat-not-burn cigarette close to the smoke generation particles and maintaining for a period of time.

Preferably, the sealing device further comprises: a base and a first support, wherein the first support is fixedly connected to the upper end of the base; a pretreating device, comprising:

the first housing, fixedly connected to the first support, wherein the upper end of the first housing is provided with a first import, and the left lower part of the first housing is provided with a first export, wherein the first housing comprises a first outer housing and a first inner housing inside the first outer housing, wherein a fixed seat is provided in the middle part between the first outer housing and the first inner housing by fixed connection, and the left part and the right part between the first outer housing and the first inner housing are all gas cavities charged with drying gas and provided with a plurality of outlet ports for the gas;

a first horizontal shaft, arranged along the front and back direction, wherein both ends of the first horizontal shaft are each rotately connected with the front inner wall and the back inner wall of the first housing, and a first driving device is arranged on the first housing for driving the first horizontal shaft to rotate;

a rotating pillar, arranged inside the first housing and fixedly connected to the first horizontal shaft, wherein the rotating pillar is provided with a plurality of first grooves at an interval along the circumferential direction, and the first groove is used for accommodating the heat-not-burn cigarette;

a collecting box, fixedly connected to the upper end of the first housing, wherein a second export on the lower end of the collecting box is communicated with the first import;

a processing box, fixedly connected with the upper end of the base and arranged on the left side of the first housing;

a first inclined plate, with its left and right end each being fixedly connected with the right wall of the processing box and the left lower part of the first housing, and being positioned under the first export, wherein the left end of the first inclined plate is lower than the right end, the front side and the rear side of the first inclined plate are each provided with a first baffle, and the left end of the first inclined plate is communicated with the second import on the right side of the processing box;

a second support, with its upper end fixedly connected with the lower end of the first inclined plate, while the lower end of the second support being fixedly connected with the base;

the coating mechanism is arranged inside the processing box, along with a second inclined plate, wherein the left side of the second inclined plate is lower than the right side, the right end of the second inclined plate is positioned under the second import, and a second storage box is arranged on the upper end of the base and on the left side of the processing box.

Preferably, the coating mechanism comprises:

a fixed box, fixedly connected with inner wall on the lower end of the processing box, wherein the fixed box is positioned between the inner wall on the lower end of the processing box and the second inclined plate;

a first vertical shaft, rotately connected with the inner wall on the upper and the lower end of the fixed box, wherein a second driving device is arranged inside the fixed box for driving the first vertical shaft to rotate;

a first bevel gear and a third gear, fixedly connected to the first vertical shaft at an interval up and down;

a U-shape seat, with its front side and rear side each connected with one end of the first horizontal connecting rod, while the other end of the first horizontal connecting rod being fixedly connected with the front inner wall or the back inner wall of the fixed box;

a second horizontal shaft, with its both ends each rotately connected with the back inner wall of the fixed box and the rear side wall of the U-shape seat;

a third horizontal shaft, with its both ends each rotately connected with the front inner wall of the fixed box and the front side wall of the U-shape seat;

a second bevel gear, fixedly connected to the second horizontal shaft;

a third bevel gear, fixedly connected to the third horizontal shaft, wherein the second bevel gear and the third bevel gear are each engaged with the lower ends on the rear side and the front side of the first bevel gear;

a first gear, fixedly connected to the second horizontal shaft;

a second gear, fixedly connected to the third horizontal shaft;

a first vertical ratch, which vertically slides through the first horizontal connecting rod at the rear side and the upper end of the fixed box, and is engaged with the left side of the first gear;

a second vertical ratch, which vertically slides through the first horizontal connecting rod at the front side and the upper end of the fixed box, and is engaged with the right side of the second gear;

a first stop, fixedly connected to the upper ends of the first vertical ratch and the second vertical ratch, wherein a third sliding hole is arranged on the second inclined plate for the first stop to slide up and down;

a first horizontal ratch, which slides through the rear side wall of the fixed box along the left-to-right direction and is engaged with the right side of the third gear;

a second horizontal ratch, which slides through the front side wall of the fixed box along the left-to-right direction and is engaged with the left side of the third gear;

a first vertical connecting rod, fixedly connected to the upper end of the first horizontal ratch, wherein a first sliding hole is arranged on the second inclined plate for the first vertical connecting rod to slide front and back, and the first sliding hole goes through the second inclined plate along the vertical direction;

a second vertical connecting rod, fixedly connected to the upper ends of the second horizontal ratch, wherein a second sliding hole is arranged on the second inclined plate for the second vertical connecting rod to slide front and back, and the second sliding hole goes through the second inclined plate along the vertical direction;

a first coating seat, fixedly connected to the first vertical connecting rod and being positioned at the rear side of the heat-not-burn cigarette to be sealed;

a second coating seat, fixedly connected to the second vertical connecting rod and being positioned at the front side of the heat-not-burn cigarette to be sealed.

Preferably, the pressing mechanism is arranged inside the processing box and right above the second inclined plate, and the pressing mechanism is located on the left side of the coating mechanism, and the pressing mechanism comprises:

a first horizontal pipeline, with its rear end fixedly connected with the back inner wall of the processing box;

a second horizontal pipeline, with its front end fixedly connected with the front inner wall of the processing box, wherein both the first horizontal pipeline and the second horizontal pipeline are used for vertically placing the plug end wrap paper to be used, and the heat-not-burn cigarette to be sealed is arranged between the first horizontal pipeline and the second horizontal pipeline;

a third support, fixedly connected to the rear side wall of the fixed box;

a fourth gear, rotately connected to the third support, wherein a third driving device is arranged on the third support for driving the fourth gear to rotate;

a third horizontal ratch, slippingly connected inside the processing box along the front and back direction, wherein the third horizontal ratch is engaged with the lower side of the fourth gear;

a fourth horizontal ratch, slippingly connected inside the processing box along the front and back direction, wherein the fourth horizontal ratch is engaged with the upper side of the fourth gear;

a first vertical push rod, with its upper end fixedly connected to the lower end of the fourth horizontal ratch, wherein the lower end of the first vertical push rod goes through the first horizontal pipeline, and the upper end of the first horizontal pipeline is provided with a fourth sliding hole for the first vertical push rod to slide front and back;

a second vertical push rod, with its upper end fixedly connected to the lower end of the third horizontal ratch, wherein the lower end of the first vertical push rod goes through the second horizontal pipeline, and the upper end of the second horizontal pipeline is provided with a fifth sliding hole for the second vertical push rod to slide front and back;

the right lower part of the first housing is provided with a third export, wherein the third export is provided with a closing door capable of automatically opening and closing, and the upper end of the base is fixedly connected with a first storage box right under the third export;

a detection device is arranged on the inner wall of the first housing and used for detecting the quality of the heat-not-burn cigarette.

Preferably, it also comprises a collecting device, which comprises:

a conveying plate, with its right end rotately connected with the fourth export on the left end of the processing box;

a first connecting spring, with its both ends each fixedly connected with the right lower end of the conveying plate and the left end of the processing box;

a first fixed housing and a second fixed housing, wherein the upper end of the first fixed housing is fixedly connected to the upper end of the base and is positioned on the left side of the processing box, and the second fixed housing is fixedly connected to the right upper end of the first fixed housing;

a vertical barrier, fixedly connected inside the first fixed housing, wherein the vertical barrier divides the first fixed housing into a first chamber and a second chamber;

a horizontal electric stretchable rod, fixedly connected inside the second chamber;

a first moving block, fixedly connected to the stretchable end of the left end of the horizontal electric stretchable rod, wherein the first moving block is slippingly connected with the inner wall of the lower end of the second chamber in a left-to-right direction, and the upper end of the first moving block is provided with a first inclined plane, wherein the first inclined plane is higher on the left side and lower on the right side;

a first horizontally moving rod, with its right end fixedly connected to the left end of the first moving block, wherein the left end of the first horizontally moving rod slides through inside the first chamber;

a second moving block, fixedly connected to the left end of the first horizontally moving rod, wherein the upper end of the second moving block is provided with a second inclined plane, wherein the second inclined plane is lower on the left side and higher on the right side;

a horizontal support plate, with its both left and right end each fixedly connected with a third moving block, wherein the third moving block is slippingly connected with the left inner wall or the right inner wall of the first chamber vertically, the upper end of the horizontal support plate is fixedly connected with a vertical moving rod, the vertical moving rod slides through the upper end of the first chamber, the upper end of the vertical moving rod is fixedly connected with an adsorption device, a third inclined plane is arranged on the side of the third moving blocks close to each other, and the height of the side of two third inclined planes close to each other is lower than the height of the side far away from each other;

an arc push block, fixedly connected to the lower end of the horizontal support plate and is in contact with the second inclined plane;

two sets of bilaterally symmetrical limiting assemblies, each fitted with two third moving blocks, wherein the limiting assembly comprises: a second vertical push rod, going through the upper end of the first chamber and slippingly connected with the upper end of the first chamber in the left-to-right direction; a limiting block, fixedly connected to the upper end of the side of two second vertical push rods close to each other; a fitting block, fixedly connected to the lower end of the side of two second vertical push rods far away from each other, wherein an arc fitting surface is provided on the side of the fitting blocks far away from each other, and the arc fitting surface is in contact fit with the third inclined plane; a second storage box, placed on the upper end of the base, wherein the limiting assembly is used for limiting the second storage box; a conveying plate, used for conveying the heat-not-burn cigarette processed by the processing box to the second storage box;

a fourth vertical push rod, with its lower end going through the upper end of the second chamber, wherein the upper end of the fourth vertical push rod goes through the upper end of the second fixed housing, and the lower end of the fourth vertical push rod is provided with a fitting wheel, wherein the fitting wheel is in contact fit with the first inclined plane;

a repositioning block, fixedly connected to the middle of the fourth vertical push rod;

a second connecting spring, surroundingly connected to the fourth vertical push rod, wherein both ends of the second connecting spring are each fixedly connected to the repositioning block and the inner wall of the lower end of the second fixed housing;

an auxiliary storage box, fixedly connected to the left part of the upper end of the second fixed housing;

a first slip connecting rod, slipping through the right side wall of the auxiliary storage box, wherein the left end of the first slip connecting rod is fixedly connected to a drying device or a dedusting device, and the the left side wall of the auxiliary storage box is provided with a through hole for the drying device or the dedusting device;

a guide block, fixedly connected to the right part of the upper end of the second fixed housing;

a second slip connecting rod, slipping through the guide block, wherein the right end of the second slip connecting rod is provided with a first conductive body, and the left side of the processing box is provided with a second conductive body, wherein the first conductive body and the second conductive body are in contact conduction so as to provide power supply to the drying device or the dedusting device;

a first auxiliary rod, with its upper end rotately connected to the upper part of the fourth vertical push rod, and its lower end rotately connected to the right part of the first slip connecting rod;

a second auxiliary rod, with its upper end rotately connected to the upper part of the fourth vertical push rod, and its lower end rotately connected to the left part of the second slip connecting rod.

A vaping device, comprising any of the plug end wrap paper of the heat-not-burn cigarette as mentioned above.

The technical solutions of the present invention will be further described in detail below with reference to the accompanying drawings and Examples.

## BRIEF DESCRIPTION OF THE DRAWINGS

The accompanying figures are included to provide a further understanding of the invention and constitute a part of the specification, and together with the Examples of the invention, serve to explain the invention and not to limit the invention. In the Figures:

Fig. 1 is a schematic structural diagram of an example of the present invention.
Fig. 2 is a schematic structural diagram of a sealing device of an example of the present invention.
Fig.3 is a schematic structural diagram of the first housing in Fig. 2.
Fig. 4 is a schematic structural diagram of a coating mechanism of an example of the present invention.
Fig. 5 is a partially enlarged view of the portion A in Fig. 4.
Fig. 6 is a schematic structural diagram of a pressing mechanism of an example of the present invention.

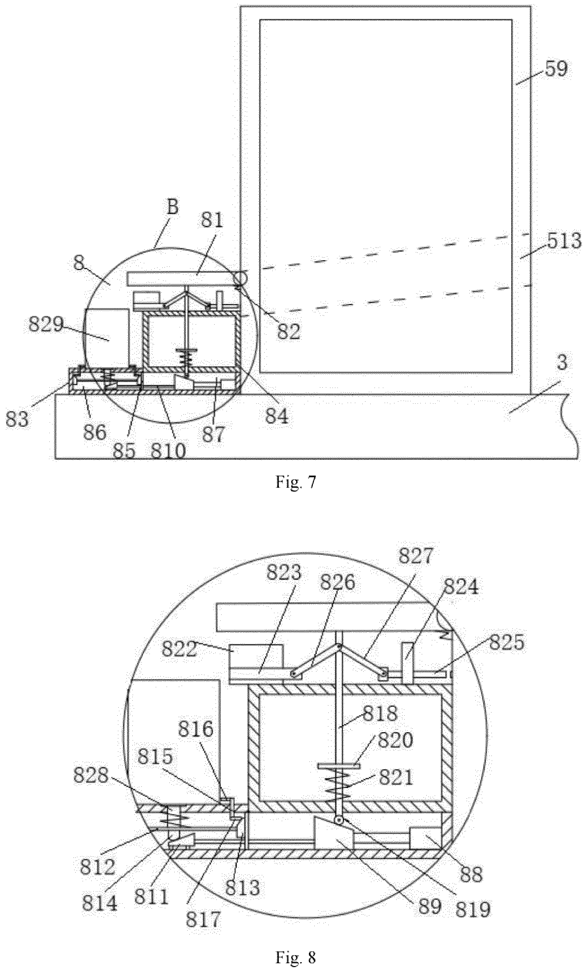

Fig. 7 is a schematic structural diagram of a collecting device of an example of the present invention.
Fig. 8 is a partially enlarged view of the portion B in Fig. 7.

In the Figures: 100, round paper sheet body; 200, antibacterial layer; 300, waterproof layer; 400, high-temperature-resistant layer; 500, flame-retardant layer; 1, coating mechanism; 11, fixed box; 12, first vertical shaft; 13, first bevel gear; 14, third gear; 15, U-shape seat; 16, first horizontal connecting rod; 17, second horizontal shaft; 18, third horizontal shaft; 19, second bevel gear; 110, third bevel gear; 111, first gear; 112, second gear; 113, first vertical ratch; 114, second vertical ratch; 115, first stop; 116, first horizontal ratch; 117, second horizontal ratch; 118, first vertical connecting rod; 119, second vertical connecting rod; 120, first coating seat; 121, second coating seat; 2, pressing mechanism; 21, first horizontal pipeline; 22, second horizontal pipeline; 23, third support; 24, fourth gear; 25, third horizontal ratch; 26, fourth horizontal ratch; 27, first vertical push rod; 28, second vertical push rod; 3, base; 4, first support; 5, pretreating device; 51, first outer housing; 52, first inner housing; 521, first export; 522, third export; 53, gas cavity; 54, fixed seat; 55, first horizontal shaft; 56, rotating pillar; 57, first groove; 58, collecting box; 59, processing box; 510, first inclined plate; 511, second support; 512, first baffle; 513, second inclined plate; 514, first storage box; 514, first housing; 6, heat-not-burn cigarette; 7, plug end wrap paper; 8, collecting device; 81, conveying plate; 82, first connecting spring; 83, first fixed housing; 84, second fixed housing; 85, vertical barrier; 86, first chamber; 87, second chamber; 88, horizontal electric stretchable rod; 89, first moving block; 810, first horizontally moving rod; 811, second moving block; 812, horizontal support plate; 813, third moving block; 814, arc push block; 815, third vertical push rod; 816, limiting block; 817, fitting block; 818, fourth vertical push rod; 819, fitting wheel; 820, repositioning block; 821, second connecting spring; 822, auxiliary storage box; 823, first slip connecting rod; 824, guide block; 825, second slip connecting rod; 826, first auxiliary rod; 827, second auxiliary rod; 828, vertical moving rod; 829, second storage box.

## DETAILED DESCRIPTION

Preferred examples of the present invention are described below with reference to the accompanying drawings. It should be understood that the preferred examples described herein are merely illustrative and explanatory of the present invention and are not intended to limit the present invention.

In addition, references to "first", "second", etc. in the description of the present invention are used for descriptive purposes only, not intended for specific order or sequence, and not used to limit the present invention. They are only used to distinguish between components or operations described by the same technical term, and shall not be construed as indicating or implying the relative importance or the number of the technical features indicated. Thus, the features defined with "first" and "second" may explicitly or implicitly include at least one of the features. In addition, the technical solutions and technical features of each example may be combined with each other. The combination must be based on the fact that a person of ordinary skill in the art can realize. When the combination of the technical solutions is contradictory or cannot be realized, it should be considered that such combination of the technical solutions does not exist and is not within the scope of the present invention.

Example 1:

The example of the invention provides a plug end wrap paper of a heat-not-burn cigarette, comprising a sealing round paper sheet which can be easily punctured by a heating needle, the sealing round paper sheet being provided with a plurality of micropores, the diameter of the micropores being smaller than the diameter of smoke generation particles of the heat-not-burn cigarette 6, and the sealing round paper sheet comprising a sealing round paper sheet body 100, and further comprising: a functional layer arranged on the outer side or the inner side of the sealing round paper sheet body 100.

Among others, the sealing round paper sheet body 100 is the sealing round paper sheet of the patent CN 112641135 B by the present applicant (the sealing round paper sheet is provided with a plurality of micropores, and these micropores are arranged in order or randomly; the micropores are circular, the diameter of the micropores is smaller than the diameter of the smoke generation particles of the heat-not-burn cigarette 6 ranging from 20 nm to 50 nm; the density of the micropores is from 200 to 300/cm2, and the diameter of the sealing round paper sheet is from 0.8 cm to 1.2 cm with an air permeability ranging from 1000 to 5000 CU; the sealing round paper sheet body 100 comprises a first layer, wherein the first layer is a tipping paper layer with a thickness between 0.3 mm to 0.5 mm.

The tensile strength of the tipping paper layer was in the range from 1.3 to -1.8/g.cm-3. The sealing round paper sheet also comprises a second layer; the second layer is laid on the inner side of the tipping paper layer, and is a wrap paper layer with high-air-permeability and a thickness ranging from 0.2mm to - 0.6mm. The wrap paper layer with high-air-permeability is prepared by mixing one or more of broadleaf wood sulfite pulp, broadleaf wood sulfate pulp, coniferous wood sulfite pulp and coniferous wood sulfate pulp. The sealing round paper sheet has a certain tensile strength, so that it is possible to prevent the smoke generation particles from falling off due to breakage of the sealing round paper sheet during transportation or before use).

The plug end wrap paper 7 of the invention is provided with a plurality of micropores thereon, which increase the air permeability, so that when the smoke generation particles are heated, the external air enters the cigarette, so as to facilitate smoke generation and circulation of the smoke generation particles.

The invention also provides a vaping device, comprising the plug end wrap paper of the heat-not-burn cigarette as mentioned above.

Other details of the sealing round paper sheet can be specifically referred to CN 112641135 B by the applicant.

The beneficial effects of the technical solution described above are as follows:

in the above technical solution, the functional layer is arranged on the outer side of the sealing round paper sheet body 100, so that the plug end wrap paper 7 of the present invention can have various functions, such as the antibacterial function described below, which is more conducive to improving the use effect (experience) of the present invention.

Example 2

On the basis of Example 1, the functional layer comprises an antibacterial layer 200 (or a bacteria barrier layer), which is arranged on the outer side of the sealing round paper sheet body 100.

Among others, the antibacterial layer 200 is an existing antibacterial layer 200; and optionally, it can be a chitosan antibacterial coating, or polypropylene resin modified by an inorganic antibacterial agent, or a PU antibacterial layer 200, or a cereal amino acid antibacterial coating.

The beneficial effects of the technical solution described above are as follows: the antibacterial layer 200 above is arranged, so that the plug end wrap paper 7 of the invention has the antibacterial function and is conducive to improving the use experience of the present invention.

Example 3

On the basis of Example 1 or 2, optionally, the functional layer comprises: a waterproof layer 300 (such as a waterproof and air permeable coating) and a high-temperature-resistant layer 400, and the high-temperature-resistant layer 400 and the waterproof layer 300 are sequentially arranged on the outer side of the sealing round paper sheet body 100.

Optionally, on the basis of Example 2, the antibacterial layer 200 can be located on the outer side the waterproof layer 300.

Among others, the waterproof layer 300 and the high-temperature-resistant layer 400 can be an existing waterproof layer 300 and an existing high-temperature-resistant layer 400 respectively; optionally, for example, the high-temperature-resistant layer 400 can be polyurethane, or a film layer made of high-temperature-resistant coating, or a polyphenyl thioether thermoplastic resin layer, or a phenolic resin layer, etc.; or other existing high-temperature-resistant layers.

The waterproof layer 300 can be a composite acrylic acid waterproof and air permeable glue, or a super-hydrophobic coating, or chlorinated polyethylene, or a PVC waterproof layer 300, or a waterproof and air permeable paper layer, or a polypropylene film or a polyester film, or a resin layer, or other existing waterproof layers;

among others, the optional layers of the present invention can be bonded by an adhesive or by other existing methods for the attachment of composite layers.

The beneficial effects of the technical solution described above are as follows: the waterproof layer 300 and the high-temperature-resistant layer 400 are arranged, so that the plug end wrap paper 7 of the invention has a waterproof function and a high-temperature-resistant function, which prolongs the service life of the present product, is more convenient for the protection, and is conducive to improving the use experience of the present invention.

Example 4

On the basis of Example 1, 2 or 3, optionally, the functional layer further comprises a flame-retardant layer 500 (or a high-temperature-resistant layer 400), which is arranged on the inner side of the sealing round paper sheet body 100.

Among others, the flame-retardant layer 500 can be an existing flame-retardant layer 500, and optionally, for example, the flame-retardant layer 500 can be magnesium hydroxide, or a sizing layer containing a flame retardant, or a halogen-free flame retardant layer, or aluminum foil or tin foil. It also can be other existing flame-retardant layers;

the beneficial effects of the technical solution described above are as follows: the flame-retardant layer 500 is arranged, so that the plug end wrap paper 7 of the present invention has a flame-retardant function, which prolongs the service life of the present product, and is more convenient for the protection of the invention.

Example 5

On the basis of any one of Examples 1 to 4, the sealing device of the plug end wrap paper 7 of the heat-not-burn cigarette 6 comprises:

a coating mechanism 1 for coating an adhesive on the end of the heat-not-burn cigarette 6 close to the smoke generation particles;

a pressing mechanism 2 for pressing the plug end wrap paper 7 of the heat-not-burn cigarette 6 to the end of the heat-not-burn cigarette 6 close to the smoke generation particles and maintaining for a period of time. The coating mechanism and the pressing mechanism above can be existing mechanisms.

The working principle and the beneficial effects of the technical solution above are as follows: the sealing step/method of the sealing device of the plug end wrap paper 7 of the heat-not-burn cigarette 6 is as follows: the adhesive is coated on the end of the heat-not-burn cigarette 6 close to the smoke generation particles by the coating mechanism 1 (of course, the adhesive can also be coated on the inner side of the plug end wrap paper of the heat-not-burn cigarette); the plug end wrap paper 7 of the heat-not-burn cigarette 6 is pressed to the end of the heat-not-burn cigarette 6 close to the smoke generation particles and maintained for a period of time by the pressing mechanism 2;

preferably, in the step of pressing the plug end wrap paper of the heat-not-burn cigarette to the end of the heat-not-burn cigarette close to the smoke generation particles and maintaining for a period of time, heating device is adopted to heat the bonding part during maintenance. The heating temperature of the device ranges from 100 to 300 °C.

Other details of the sealing method can be specifically referred to CN 112641135 B by the applicant.

Example 6

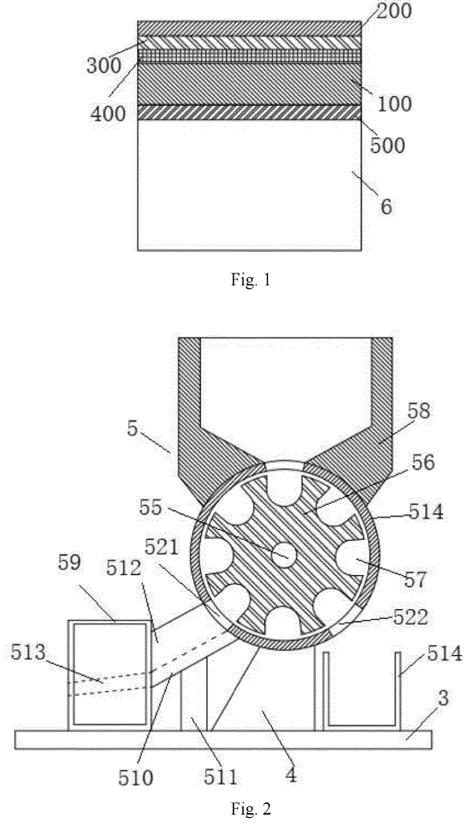

On the basis of Example 5, as shown in Fig. 2, the sealing device further comprises: a base 3 and a first support 4, wherein the first support 4 is fixedly connected to the upper end of the base 3; a pretreating device 5, comprising:

the first housing 514, fixedly connected to the first support 4, wherein the upper end of the first housing 514 is provided with a first import, and the left lower part of the first housing 514 is provided with a first export 521, wherein the first housing 514 comprises: a first outer housing 51 and a first inner housing 52 inside the first outer housing, wherein a fixed seat 54 is provided in the middle part between the first outer housing 51 and the first inner housing 52 by fixed connection, and the left part and the right part between the first outer housing 51 and the first inner housing 52 are all gas cavities 53 charged with drying gas and provided with a plurality of outlet ports for the gas;

a first horizontal shaft 55, arranged along the front and back direction, wherein both ends of the first horizontal shaft 55 are each rotately connected with the front inner wall and the back inner wall of the first housing 514, and a first driving device is arranged on the first housing 514 for driving the first horizontal shaft 55 to rotate;

a rotating pillar 56, arranged inside the first housing 514 and fixedly connected to the first horizontal shaft 55, wherein the rotating pillar 56 is provided with a plurality of first grooves 57 at an interval along the circumferential direction, and the first groove 57 is used for accommodating the heat-not-burn cigarette 6; specifically, the front and rear end of the first groove can be closed;

a collecting box 58, fixedly connected to the upper end of the first housing 514, wherein a second export on the lower end of the collecting box 58 is communicated with the first import;

a processing box 59, fixedly connected with the upper end of the base 3 and arranged on the left side of the first housing 514;

a first inclined plate 510, with its left and right end each being fixedly connected with the right wall of the processing box 59 and the left lower part of the first housing 514, and the first inclined plate 510 being positioned under the first export 521, wherein the left end of the first inclined plate 510 is lower than the right end, the front side and the rear side of the first inclined plate 510 are each provided with a first baffle 512, and the left end of the first inclined plate 510 is communicated with the second import on the right side of the processing box 59;

a second support 511, with its upper end fixedly connected with the lower end of the first inclined plate 510, while the lower end of the second support 511 being fixedly connected with the base 3;

the coating mechanism 1 is arranged inside the processing box 59, along with a second inclined plate 513, wherein the left side of the second inclined plate 513 is lower than the right side, the right end of the second inclined plate 513 is positioned under the second import, and a second storage box 829 is arranged on the upper end of the base 3 and on the left side of the processing box 59.

The coating mechanism 1 can be an existing adhesive coating device;

the working principle and the beneficial effects of the technical solution above are as follows:

the heat-not-burn cigarettes 6 to be sealed are thrown into the collecting box 58. Only one heat-not-burn cigarettes 6 to be sealed enters the first import of the first housing 514 through the second export of the collecting box 58 each time, and then falls into the first groove 57 right below the first import, wherein the first horizontal shaft 55 and the rotating pillar 56 are driven to rotate by the first driving device, which forces the heat-not-burn cigarettes 6 in the first groove 57 to rotate to the first groove 57 at the first export 521. When the heat-not-burn cigarettes 6 move with the first groove 57, the drying gas in the gas cavity 53 dries the heat-not-burn cigarettes 6 through the outlet ports thereon to prevent the heat-not-burn cigarettes 6 from being damp or partially wet and influence their use experience. The heat-not-burn cigarettes 6 discharged from the first export 521 enter the processing box 59 through the first inclined plate 510 for further processing, such as the coating process described above.

the arrangement of the rotating first groove 57 described above facilitates the movement of a single heat-not-burn cigarette 6 from the first import to the first export 521, with drying taking place while rotating in the process, facilitating the automatic pretreatment of the heat-not-burn cigarette 6 one by one. At the same time, a plurality of the heat-not-burn cigarettes 6 can be sequentially treated by a plurality of the first grooves 57.

Example 7

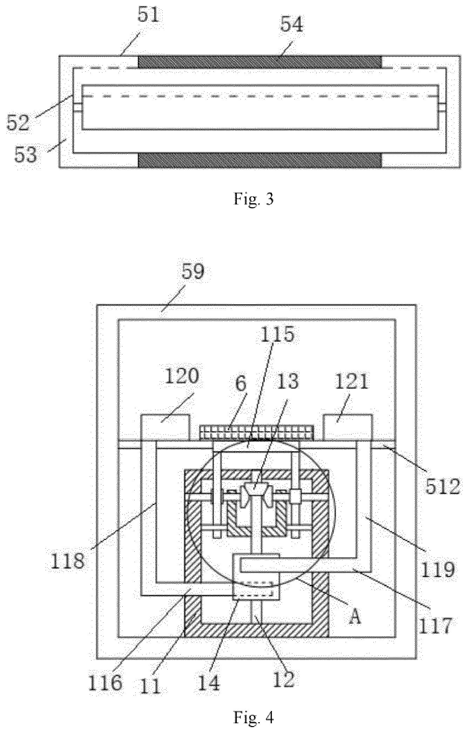

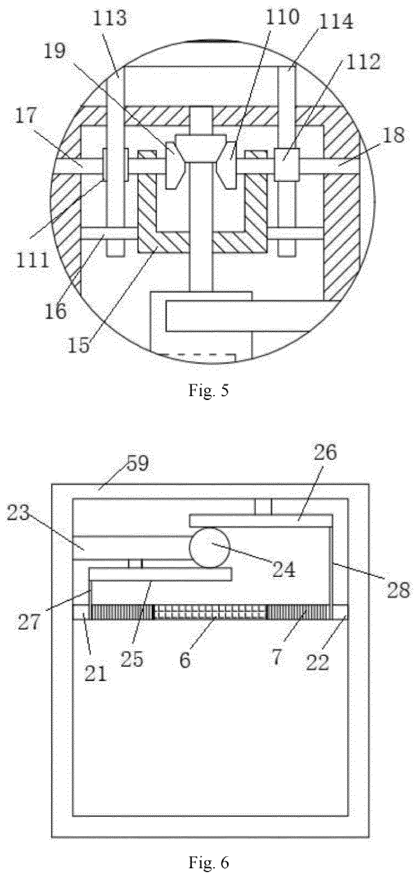

On the basis of Example 6, as shown in Fig. 2-5, the coating mechanism 1 comprises:

a fixed box 11, fixedly connected with inner wall on the lower end of the processing box 59, wherein the fixed box 11 is positioned between the inner wall on the lower end of the processing box 59 and the second inclined plate 513;

a first vertical shaft 12, rotately connected with the inner wall on the upper and the lower end of the fixed box 11, wherein a second driving device is arranged inside the fixed box 11 for driving the first vertical shaft 12 to rotate;

a first bevel gear 13 and a third gear 14, fixedly connected to the first vertical shaft 12 at an interval up and down;

a U-shape seat 15, with its front side and rear side each connected with one end of the first horizontal connecting rod 16, while the other end of the first horizontal connecting rod 16 being fixedly connected with the front inner wall or the back inner wall of the fixed box 11;

a second horizontal shaft 17, with its both ends each rotately connected with the back inner wall of the fixed box 11 and the rear side wall of the U-shape seat 15;

a third horizontal shaft 18, with its both ends each rotately connected with the front inner wall of the fixed box 11 and the front side wall of the U-shape seat 15;

a second bevel gear 19, fixedly connected to the second horizontal shaft 17;

a third bevel gear 110, fixedly connected to the third horizontal shaft 18, wherein the second bevel gear 19 and the third bevel gear 110 are each engaged with the lower ends on the rear side and the front side of the first bevel gear 13;

a first gear 111, fixedly connected to the second horizontal shaft 17;

a second gear 112, fixedly connected to the third horizontal shaft 18;

a first vertical ratch 113, which vertically slides through the first horizontal connecting rod 16 at the rear side and the upper end of the fixed box 11, and is engaged with the left side of the first gear 111;

a second vertical ratch 114, which vertically slides through the first horizontal connecting rod 16 at the front side and the upper end of the fixed box 11, and is engaged with the right side of the second gear 112;

a first stop 115, fixedly connected to the upper ends of the first vertical ratch 113 and the second vertical ratch 114, wherein a third sliding hole is arranged on the second inclined plate 513 for the first stop 115 to slide up and down;

a first horizontal ratch 116, which slides through the rear side wall of the fixed box 11 along the left-to-right direction and is engaged with the right side of the third gear 14;

a second horizontal ratch 117, which slides through the front side wall of the fixed box 11 along the left-to-right direction and is engaged with the left side of the third gear 14;

a first vertical connecting rod 118, fixedly connected to the upper end of the first horizontal ratch 116, wherein a first sliding hole is arranged on the second inclined plate 513 for the first vertical connecting rod 118 to slide front and back, and the first sliding hole goes through the second inclined plate 513 along the vertical direction;

a second vertical connecting rod 119, fixedly connected to the upper end of the second horizontal ratch 117, wherein a second sliding hole is arranged on the second inclined plate 513 for the second vertical connecting rod 119 to slide front and back, and the second sliding hole goes through the second inclined plate 513 along the vertical direction;

a first coating seat 120, fixedly connected to the first vertical connecting rod 118 and being positioned at the rear side of the heat-not-burn cigarette 6 to be sealed;

a second coating seat 121, fixedly connected to the second vertical connecting rod 119 and being positioned at the front side of the heat-not-burn cigarette 6 to be sealed.

The working principle and the beneficial effects of the technical solution above are as follows:

the heat-not-burn cigarettes 6 on the first inclined plate 510 enter the processing box 59 through the second import on the right side of the processing box 59, and slide down from the second inclined plate 513 from right to left for transportation. The first vertical shaft 12 is driven by the second driving device to rotate forwardly, as a consequence of which, on one hand, the first bevel gear 13 rotates therewith, the first bevel gear 13 drives the second horizontal shaft 17 to rotate by rotating with the second bevel gear 19, and the first bevel gear 13 drives the third horizontal shaft 18 to rotate by rotating with the third bevel gear 110. The rotation of the second horizontal shaft 17 drives the first vertical ratch 113 to move upward through the engagement between the first gear 111 thereron and the first vertical ratch 113. The rotation of the third horizontal shaft 18 drives the second vertical ratch 114 to move upward through the engagement between the second gear 112 thereon and the second vertical ratch 114, so that the first vertical ratch 113 and the second vertical ratch 114 push the first stop 115 to move upward and pass through the third sliding hole to the position above the second inclined plate 513. The first stop 115 blocks on the left side of the falling heat-not-burn cigarettes 6 to prevent them from further falling off;

the first vertical shaft 12 is driven by the second driving device to rotate forwardly, and the third gear 14 rotates therewith to drive the first horizontal ratch 116 and the second horizontal ratch 117 engaged with the third gear 14 to approach each other, so that the first coating seat 120 and the second coating seat each coat the adhesive on the rear end and the front end of the heat-not-burn cigarette 6.

After the coating is completed, the first vertical shaft 12 is driven by the second driving device to rotate reversely, so that on one hand, the first stop 115 moves downward to a position below the upper end surface of the second inclined plate 513, and on the other hand, the first coating seat 120 and the second coating seat are far away from the heat-not-burn cigarette 6. After coating, the heat-not-burn cigarette 6 continues to slide downward to the left for subsequent processing. For example, the plug end wrap paper 7 is pressed by the pressing mechanism 2 (which can be an existing pressing mechanism 2), so that the plug end wrap paper 7 is reliably pressed on the heat-not-burn cigarette 6.

According to the technical solution, the drive control becomes convenient by synchronously driving the downward-movement limiting and the coating of both the front and rear side using the same driver.

Example 8

On the basis of Example 6 or 7, as shown in Fig. 2-6, the pressing mechanism 2 is arranged inside the processing box 59 and right above the second inclined plate, and the pressing mechanism 2 is located on the left side of the coating mechanism 1, and the pressing mechanism 2 comprises:

a first horizontal pipeline 21, with its rear end fixedly connected with the back inner wall of the processing box 59;

a second horizontal pipeline 22, with its front end fixedly connected with the front inner wall of the processing box 59, wherein both the first horizontal pipeline 21 and the second horizontal pipeline 22 are used for vertically placing the plug end wrap paper 7 to be used, and the heat-not-burn cigarette 6 to be sealed is arranged between the first horizontal pipeline 21 and the second horizontal pipeline 22;

a third support 23, fixedly connected to the rear side wall of the fixed box 11;

a fourth gear 24, rotately connected to the third support 23, wherein a third driving device is arranged on the third support for driving the fourth gear to rotate;

a third horizontal ratch 25, slippingly connected inside the processing box 59 along the front and back direction, wherein the third horizontal ratch 25 is engaged with the lower side of the fourth gear 24;

a fourth horizontal ratch 26, slippingly connected inside the processing box 59 along the front and back direction, wherein the fourth horizontal ratch is engaged with the upper side of the fourth gear 24;

a first vertical push rod 27, with its upper end fixedly connected to the lower end of the fourth horizontal ratch, wherein the lower end of the first vertical push rod 27 goes through the first horizontal pipeline 21, and the upper end of the first horizontal pipeline 21 is provided with a fourth sliding hole for the first vertical push rod 27 to slide front and back;

a second vertical push rod 28, with its upper end fixedly connected to the lower end of the third horizontal ratch 25, wherein the lower end of the first vertical push rod 27 goes through the second horizontal pipeline 22, and the upper end of the second horizontal pipeline 22 is provided with a fifth sliding hole for the second vertical push rod 28 to slide front and back;

optionally, the right lower part of the first housing 514 is provided with a third export 522, wherein the third export 522 is provided with a closing door capable of automatically opening and closing, and the upper end of the base 3 is fixedly connected with a first storage box 514 right under the third export 522; a detection device is arranged on the inner wall of the first housing 514 and used for detecting the quality of the heat-not-burn cigarette 6. Among others, the detection device is used for detecting the surface quality of the heat-not-burn cigarette, and can be a camera (a cigarette surface image is acquired by the camera and is compared with a standard image stored in the memory to judge whether the cigarette is qualified or not, and the memory is connected with the control device). The detection device is connected with a control device, and the control device is connected with a door closing control device capable of automatically opening and closing. When the surface quality of the heat-not-burn cigarette is detected to be unqualified, the control device open the closing door to realize the classification of the heat-not-burn cigarette.

optionally, in this example, the first stop can also be provided (or the first stop is not provided, and the heat-not-burn cigarettes are held by the pushing force from the first vertical push rod and the second vertical push rod), without providing a third gear and related components, or an electric stretchable rod may directly drive the first stop to move up and down.

The working principle and the beneficial effects of the technical solution are as follows:

when the coated heat-not-burn cigarettes 6 slide to the pressing mechanism 2, the third driving device drives the fourth gear 24 to rotate forwardly, so that the third horizontal ratch 2625 and the fourth horizontal ratch are close to each other, and the first vertical push rod 27 and the second vertical push rod 28 are close to each other. The first vertical push rod 27 pushes the plug end wrap paper 7 closest to the heat-not-burn cigarette 6 in the first horizontal pipe 21 to contact with the coating surface of the heat-not-burn cigarette, and the second vertical push rod 28 pushes the plug end wrap paper 7 closest to the heat-not-burn cigarette 6 in the second horizontal pipe 22 to contact with the coating surface of the heat-not-burn cigarette, so that both ends of the heat-not-burn cigarette 6 are sealed by the plug end wrap paper 7. According to the technical solution, both ends of the heat-not-burn cigarette 6 are synchronously and continuously sealed through one driving device, making the sealing convenient.

Example 9

On the basis of Example 6 or 7 or 8, as shown in Fig. 2-5, a collecting device 8 is further included, wherein the collecting device 8 comprises:

a conveying plate 81, with its right end rotately connected with the fourth export on the left end of the processing box 59;
a first connecting spring 82, with its both ends each fixedly connected with the right lower end of the conveying plate 81 and the left end of the processing box 59;
a first fixed housing 83 and a second fixed housing 84, wherein the upper end of the first fixed housing 83 is fixedly connected to the upper end of the base 3 and is positioned on the left side of the processing box 59, and the second fixed housing 84 is fixedly connected to the right upper end of the first fixed housing 83;
a vertical barrier 85, fixedly connected inside the first fixed housing 83, wherein the vertical barrier 85 divides the first fixed housing 83 into a first chamber 86 and a second chamber 87;
a horizontal electric stretchable rod 88, fixedly connected inside the second chamber 87;
a first moving block 89, fixedly connected to the stretchable end of the left end of the horizontal electric stretchable rod 88, wherein the first moving block 89 is slippingly connected with the inner wall of the lower end of the second chamber 87 in a left-to-right direction, and the upper end of the first moving block 89 is provided with a first inclined plane, wherein the first inclined plane is higher on the left side and lower on the right side;
a first horizontally moving rod 810, with its right end fixedly connected to the left end of the first moving block 89, wherein the left end of the first horizontally moving rod 810 slides through inside the first chamber 86;
a second moving block 811, fixedly connected to the left end of the first horizontally moving rod 810, wherein the upper end of the second moving block 811 is provided with a second inclined plane, wherein the second inclined plane is lower on the left side and higher on the right side;
a horizontal support plate 812, with its both left and right end each fixedly connected with a third moving block 813, wherein the third moving block 813 is slippingly connected with the left inner wall or the right inner wall of the first chamber 86 vertically, the upper end of the horizontal support plate 812 is fixedly connected with a vertical moving rod 828, the vertical moving rod 828 slides through the upper end of the first chamber 86, the upper end of the vertical moving rod 828 is fixedly connected with an adsorption device, a third inclined plane is arranged on the side of the third moving blocks 813 close to each other, and the height of the side of two third inclined planes close to each other is lower than the height of the side far away from each other;
an arc push block 814, fixedly connected to the lower end of the horizontal support plate 812 and is in contact with the second inclined plane;
two sets of bilaterally symmetrical limiting assemblies, each fitted with two third moving blocks 813, wherein the limiting assembly comprises: a second vertical push rod 28, going through the upper end of the first chamber 86 and slippingly connected with the upper end of the first chamber 86 in the left-to-right direction; a limiting block 816, fixedly connected to the upper end of the side of two second vertical push rods 28 close to each other; a fitting block 817, fixedly connected to the lower end of the side of two second vertical push rods 28 far away from each other, wherein an arc fitting surface is provided on the side of the fitting blocks 817 far away from each other, and the arc fitting surface is in contact fit with the third inclined plane; a second storage box 829, placed on the upper end of the base 3, wherein the limiting assembly is used for limiting the second storage box 829; a conveying plate 81, used for conveying the heat-not-burn cigarette processed by the processing box 59 to the second storage box 829;
a fourth vertical push rod 818, with its lower end going through the upper end of the second chamber 87, wherein the upper end of the fourth vertical push rod 818 goes through the upper end of the second fixed housing 84, and the lower end of the fourth vertical push rod 818 is connected with a fitting wheel 819, wherein the fitting wheel 819 is in contact fit with the first inclined plane;

a repositioning block 820, fixedly connected to the middle of the fourth vertical push rod 818;

a second connecting spring 821, surroundingly connected to the fourth vertical push rod 818, wherein both ends of the second connecting spring 821 are each fixedly connected to the repositioning block 820 and the inner wall of the lower end of the second fixed housing 84;

an auxiliary storage box 822, fixedly connected to the left part of the upper end of the second fixed housing 84;

a first slip connecting rod 823, slipping through the right side wall of the auxiliary storage box 822, wherein the left end of the first slip connecting rod 823 is fixedly connected to a drying device or a dedusting device, and the the left side wall of the auxiliary storage box 822 is provided with a through hole for the drying device or the dedusting device;

a guide block 824, fixedly connected to the right part of the upper end of the second fixed housing 84;

a second slip connecting rod 825, slipping through the guide block 824, wherein the right end of the second slip connecting rod 825 is provided with a first conductive body, and the left side of the processing box 59 is provided with a second conductive body, wherein the first conductive body and the second conductive body are in contact conduction so as to provide power supply to the drying device or the dedusting device;

a first auxiliary rod 826, with its upper end rotately connected to the upper part of the fourth vertical push rod 818, and its lower end rotately connected to the right part of the first slip connecting rod 823;

a second auxiliary rod 827, with its upper end rotately connected to the upper part of the fourth vertical push rod 818, and its lower end rotately connected to the left part of the second slip connecting rod 825.

Optionally, the second storage box can be arranged only at the fourth export on the left side of the processing box on the upper end of the base without any other structure.

The working principle and the beneficial effects of the technical solution are as follows:

the finished heat-not-burn cigarettes 6 fall onto the conveying plate 81 through the fourth export on the left end of the processing box 59, and when the cigarettes are normally conveyed into the second storage box 829, the inclined plate is lower on the left side and higher on the right side;

when the second storage box 829 is installed, the horizontal electric stretchable rod 88 is controlled to extend leftward, so that the first moving block 89 moves leftward, and the fourth vertical push rod 818 moves downward under the gravity of the fourth vertical push rod 818 and the repositioning block 820 and the elastic force of the second connecting spring 821, and the conveying plate 81 is lower on the left side and higher on the right side.

The first moving block 89 drives the second moving block 811 to move leftwards through the first horizontal moving rod 810, and the second moving block 811 pushes the arc push block 814 to move upward, so that the horizontal support plate 812 and the third moving blocks 813 move upward, and the two third moving blocks 813 each push the two fitting blocks 817 to approach each other, which makes the two limiting blocks 816 clamp the left and right side of the second storage box 829 to limit the second storage box 829. The horizontal support plate 812 drives the vertical moving rod 828 to move upward, so that the adsorption device (which may be a suction cup, such as an electric suction cup) thereon adsorbs the lower end of the second storage box 829 to further limit it. The fourth vertical push rod 818 move downwards, and the first slip connecting rod 823 is driven by the first push rod to move leftwards, so that the drying device or the dedusting device fixedly connected to the left end of the first slip connecting rod 823 leaves the auxiliary storage box 822 and reaches the position right above the second storage box 829, and dries the heat-not-burn cigarettes 6 in the second storage box 829, or removes the dust in the second storage box 829 (for example, removes the dust at the import of the lid of the second storage box 829). The fourth vertical push rod moves downward, and the second slip connecting rod 825 is driven by the second push rod to move rightward, so that the first conductive body and the second conductive body are in contact conduction so as to provide power supply to the drying device or the dedusting device, further to realize drying or dedusting.

when the second storage box 829 is disassembled, the horizontal electric stretchable rod 88 is controlled to retract rightward. On one hand, the clamping of the second storage box 829 by the limiting block 816 is stopped, and the adsorption device is separated from the lower end of the second storage box 829 and accommodated in the first fixed housing 83, realizing the protection of the adsorption device. On the other aspect, the fourth vertical push rod 818 moves upward to push the conveying plate 81 to be horizontal or higher on the left side and lower on the right side, and make the drying device or the dedusting device being accommodated in the auxiliary storage box 822, realizing the protection of the drying device or the dedusting device. At the same time, the drying device or the dedusting device is powered off, so as to avoid long term turning on and save more energy.

Example 10

On the basis of any one of examples 5-9, the pressing mechanism comprises a pressing plate (which can be arranged on the side where the first vertical push rod and the second vertical push rod are close to each other) and a driving device for pressing plate, wherein the driving device for pressing plate (which can be the third driving device) is used for driving the pressing plate to move so as to press the plug end wrap paper at both ends of the heat-not-burn cigarette.

It further comprises:

a first force sensor, wherein a detection layer is arranged on the contact surface between the pressing plate and the plug end wrap paper, and the first force sensor is arranged in the detection layer and is used to detect the pressure applied by the pressing plate to the plug end wrap paper, when the plug end wrap paper is pressed on both ends of the heat-not-burn cigarette;

a speed sensor, for detecting the moving speed of the pressing plate;

an angle detection device, for detecting the angle between the length direction of the heat-not-burn cigarette and the standard line, wherein the standard line is the line connecting the centers of the two pressing plates at both ends of the heat-not-burn cigarette;

humidity detecting device, for detecting the surface humidity of the heat-not-burn cigarette (preferably, for detecting the humidity at both ends of the heat-not-burn cigarette);

a control device (which can comprise a control unit and a calculation unit etc.) and an alarm, wherein the control device is electrically coupled with the first force sensor, the speed sensor, the angle detection device, the humidity detection device, the alarm and the driving device for pressing plate. The control device controls the operation of the alarm and the driving device for pressing plate, based on the first force sensor, the speed sensor, the angle detection device and the humidity detection device, which comprises:

based on formula (1), the humidity sensor calculates the theoretical compressive strength (unit: N)/compressive resistance M of the heat-not-burn cigarette;

$$M = \frac{\delta(1 + \frac{A}{B})\sqrt{AB}}{H} * \left[1 + 0.1 e^{-\left(\frac{4}{\sqrt{3}} * \frac{\mu v_1}{v_0} * \frac{\sqrt{\rho_1 (\rho_1 + \rho_2)}}{\rho_2} \sqrt{\varphi_1 * \varphi_2} + \frac{\omega_1}{\omega_0}\right)}\right]$$

wherein, $\delta$ is a coefficient, A is the longitudinal flexural stiffness (unit: N.m) of the tube of the heat-not-burn cigarette, B is the transverse flexural stiffness of the tube of the heat-not-burn cigarette, and H is the material thickness of the tube of the heat-not-burn cigarette;

$V_1$ is the total volume of the smoke generation segment, $V_0$ is the total volume of the smoke generation particles in the smoke generation segment, $\mu$ is the porosity of the smoke generation particles in the smoke generation segment, e is a natural constant; $\omega_1$ is the detection value from the humidity detection device, $\omega_0$ is maximum allowable humidity for the heat-not-burn cigarette; $\varphi_1$ is the Poisson ratio of the tube material, $\varphi_2$ is the Poisson ratio of the smoke generation particles; $\rho_1$ is the density of the tube material, $\rho_2$ is the density of the smoke generation particles;

when the detection value from the angle detection device is not within the preset reference range, the control device controls the alarm to give an alarm; while when the detection value from the angle detection device is within the preset reference range, the target pressure F is calculated based on the formula (2) and the speed sensor;

$$F = \frac{(1 + 3.65 M\epsilon) * (C^2 + D^2)}{2C^2(1 + \varepsilon)^2 * [1 + (\tan\theta)^2]} * \left|\ln\left[1 + \frac{(v_1)^2}{v_0 gt * \cos\gamma}\right]\right|$$

wherein, $\varepsilon$ is the ratio of the maximum stress to the minimum stress of the heat-not-burn cigarette, when both ends of the heat-not-burn cigarette are pressed at the same time (which can be obtained through experiments); C is the outer diameter of the tube, D is the inner diameter of the tube; $\theta$ is the detection value from the angle detection device;

$v_0$ is the detection value from the speed sensor, $v_1$ is the rated moving speed of the pressing plate, g is the acceleration of gravity, t is a unit time; cos is cosine, Y is the angle between the second inclined plate and the horizontal plane; one unit of the above molecule is N; tan is tangent;

the control device controls the operation of the driving device for pressing plate, so that the detection value from the first force sensor is within the preset range of the target pressure.

The heat-not-burn cigarette comprises an integrally formed packaging tube (cigarette tube) and a smoke generation segment in the packaging tube, wherein the smoke generation segment is composed of a plurality of smoke generation particles.

The working principle and the beneficial effects of the technical solution are as follows:

the following devices are arranged: a first force sensor, wherein a detection layer is arranged on the contact surface between the pressing plate and the plug end wrap paper, and the first force sensor is arranged in the detection layer and is used to detect the pressure applied by the pressing plate to the plug end wrap paper, when the plug end wrap paper is pressed on both ends of the heat-not-burn cigarette; a speed sensor, for detecting the moving speed of the pressing plate; an angle detection device, for detecting the angle between the length direction of the heat-not-burn cigarette and the standard line, wherein the standard line is the line connecting the centers of the two pressing plates at both ends of the heat-not-burn cigarette; humidity detecting device, for detecting the surface humidity of the heat-not-burn cigarette (preferably, for detecting the humidity at both ends of the heat-not-burn cigarette); the control device controls the operation of the alarm and the driving device for pressing plate, based on the first force sensor, the speed sensor, the angle detection device and the humidity detection device;

specifically: firstly, based on formula (1), the theoretical compressive strength M of the heat-not-burn cigarette is calculated by the humidity sensor, i.e., the bearable force of the heat-not-burn cigarette is initially obtained; subsequently, when the detection value from the angle detection device is not within the preset reference range, the control device controls the alarm to give an alarm, i.e., when the heat-not-burn cigarette enters the pressing mechanism obliquely that may influence the pressing effect, the alarm should be given at first; when the detection value from the angle detection device is within the preset reference range, the target pressure F is calculated based on formula (2) and the speed sensor; the control device controls the operation of the driving device for pressing plate, so that the detection value from the first force sensor is within the preset range of the target pressure, i.e., the proper target pressure is obtained based on the bearable force of the heat-not-burn cigarette; and the pressing force of the pressing plate is controlled by the target pressure, so that the heat-not-burn cigarette is prevented from being damaged due to overhigh pressure.

Specifically, the formula (1) comprehensively considers the parameters of the tube (the longitudinal flexural stiffness of the tube, the transverse flexural stiffness of the tube, the thickness of the tube material, and the Poisson ratio of the tube material), and the parameters of the smoke generation segment (the total volume of the smoke generation segment, the total volume of the smoke generation particles in the segment, the porosity of the smoking generation particles in the segment, the density of the material of the smoke generation particles, and the Poisson ratio of the material of the smoke generation particles), the influence of the surface humidity of the heat-not-burn cigarette on the bearable force of the entire cigarette, making the calculation more reliable. Formula (2) further considers the parameters of the cigarette (the ratio of the maximum stress to the minimum stress ( $\varepsilon$ ) of the heat-not-burn cigarette when both ends of the heat-not-burn cigarette are pressed at the same time (which can be obtained through experiments), the outer diameter of the tube, and the inner diameter of the tube), the placement of the cigarettes (the detection value from the angle detection device), the influence of the detection value from the speed sensor on the moving condition of the entire pressing plate, the influence of the acceleration of gravity and the angle between the second inclined plate and the horizontal plane on the sliding of the cigarettes, making the target pressure more suitable for the condition of cigarettes and the movement of the pressing plate.

It will be apparent to those skilled in the art that various modifications and variations can be made in the present invention without departing from the spirit and scope of the invention. Thus, the present invention is intended to include such modifications and variations provided they come within the scope of the appended claims and their equivalents.

**Claims**

1.  A plug end wrap paper of a heat-not-burn cigarette, comprising a sealing round paper sheet which can be easily punctured by a heating needle, the sealing round paper sheet being provided with a plurality of micropores, the diameter of the micropores being smaller than the diameter of smoke generation particles of the heat-not-burn cigarette (6), and the sealing round paper sheet being **characterized by** comprising a sealing round paper sheet body (100), and further comprising: a functional layer arranged on the outer side or the inner side of the sealing round paper sheet body (100).

2.  The plug end wrap paper of the heat-not-burn cigarette according to claim 1, which is **characterized in that**, the functional layer comprises an antibacterial layer (200), arranged on the outer side of the sealing round paper sheet body (100).

3. The plug end wrap paper of the heat-not-burn cigarette according to claim 1, which is **characterized in that**, the functional layer comprises: a waterproof layer (300), and a high-temperature-resistant layer (400), wherein the outer side of the sealing round paper sheet body (100) is sequentially provided with the high-temperature-resistant layer (400), and the waterproof layer (300).

4. The plug end wrap paper of the heat-not-burn cigarette according to claim 1, which is **characterized in that**, the functional layer further comprises: a flame-retardant layer (500), arranged on the inner side of the sealing round paper sheet body (100).

5. The sealing device of the plug end wrap paper of the heat-not-burn cigarette of any one of claims 1-4, which is **characterized by** comprising:

   a coating mechanism (1) for coating an adhesive on the end of the heat-not-burn cigarette (6) close to the smoke generation particles;
   a pressing mechanism (2) for pressing the plug end wrap paper of the heat-not-burn cigarette to the end of the heat-not-burn cigarette (6) close to the smoke generation particles and maintaining for a period of time.

6. The sealing device of the plug end wrap paper of the heat-not-burn cigarette of claim 5, which is **characterized in that**, the sealing device further comprises: a base (3), and a first support (4), wherein the first support (4) is fixedly connected to the upper end of the base (3); a pretreating device (5), wherein the pretreating device (5) comprises:

   the first housing (514), fixedly connected to the first support (4), wherein the upper end of the first housing (514) is provided with a first import, and the left lower part of the first housing (514) is provided with a first export (521), wherein the first housing (514) comprises: a first outer housing (51) and a first inner housing (52) inside the first outer housing, wherein a fixed seat (54) is provided in the middle part between the first outer housing (51) and the first inner housing (52) by fixed connection, and the left part and the right part between the first outer housing (51) and the first inner housing (52) are all gas cavities (53), which are charged with drying gas and provided with a plurality of outlet ports for the gas;
   a first horizontal shaft (55), arranged along the front and back direction, wherein both ends of the first horizontal shaft (55) are each rotately connected with the front inner wall and the back inner wall of the first housing (514), and a first driving device is arranged on the first housing (514) for driving the first horizontal shaft (55) to rotate;
   a rotating pillar (56), arranged inside the first housing (514) and fixedly connected to the first horizontal shaft (55), wherein the rotating pillar (56) is provided with a plurality of first grooves (57) at an interval along the circumferential direction, and the first groove (57) is used for accommodating the heat-not-burn cigarette (6);
   a collecting box (58), fixedly connected to the upper end of the first housing (514), wherein a second export on the lower end of the collecting box (58) is communicated with the first import;
   a processing box (59), fixedly connected with the upper end of the base (3) and arranged on the left side of the first housing (514);
   a first inclined plate (510), with its left and right end each being fixedly connected with the right wall of the processing box (59) and the left lower part of the first housing (514), and the first inclined plate (510) being positioned under the first export (521), wherein the left end of the first inclined plate (510) is lower than the right end, the front side and the rear side of the first inclined plate (510) are each provided with a first baffle (512), and the left end of the first inclined plate (510) is communicated with the second import on the right side of the processing box (59);
   a second support (511), with its upper end fixedly connected with the lower end of the first inclined plate (510), while the lower end of the second support (511) being fixedly connected with the base (3);
   the coating mechanism (1) is arranged inside the processing box (59), along with a second inclined plate (513), wherein the left side of the second inclined plate (513) is lower than the right side, the right end of the second inclined plate (513) is positioned under the second import, and a second storage box (829) is arranged on the upper end of the base (3) and on the left side of the processing box (59).

7. The sealing device of the plug end wrap paper of the heat-not-burn cigarette of claim 6, which is **characterized in that** the coating mechanism (1) comprises:

   a fixed box (11), fixedly connected with inner wall on the lower end of the processing box (59), wherein the fixed box (11) is positioned between the inner wall on the lower end of the processing box (59) and the second inclined plate (513);
   a first vertical shaft (12), rotately connected with the inner wall on the upper and the lower end of the fixed box (11),

wherein a second driving device is arranged inside the fixed box (11) for driving the first vertical shaft (12) to rotate;

a first bevel gear (13) and a third gear (14), fixedly connected to the first vertical shaft (12) at an interval up and down;

a U-shape seat (15), with its front side and rear side each connected with one end of the first horizontal connecting rod (16), while the other end of the first horizontal connecting rod (16) being fixedly connected with the front inner wall or the back inner wall of the fixed box (11);

a second horizontal shaft (17), with its both ends each rotately connected with the back inner wall of the fixed box (11) and the rear side wall of the U-shape seat (15);

a third horizontal shaft (18), with its both ends each rotately connected with the front inner wall of the fixed box (11) and the front side wall of the U-shape seat (15);

a second bevel gear (19), fixedly connected to the second horizontal shaft (17);

a third bevel gear (110), fixedly connected to the third horizontal shaft (18), wherein the second bevel gear (19) and the third bevel gear (110) are each engaged with the lower ends on the rear side and the front side of the first bevel gear (13);

a first gear (111), fixedly connected to the second horizontal shaft (17);

a second gear (112), fixedly connected to the third horizontal shaft (18);

a first vertical ratch (113), which vertically slides through the first horizontal connecting rod (16) at the rear side and the upper end of the fixed box (11), and is engaged with the left side of the first gear (111);

a second vertical ratch (114), which vertically slides through the first horizontal connecting rod (16) at the front side and the upper end of the fixed box (11), and is engaged with the right side of the second gear (112);

a first stop (115), fixedly connected to the upper ends of the first vertical ratch (113) and the second vertical ratch (114), wherein a third sliding hole is arranged on the second inclined plate (513) for the first stop (115) to slide up and down;

a first horizontal ratch (116), which slides through the rear side wall of the fixed box (11) along the left-to-right direction and is engaged with the right side of the third gear (14);

a second horizontal ratch (117), which slides through the front side wall of the fixed box (11) along the left-to-right direction and is engaged with the left side of the third gear (14);

a first vertical connecting rod (118), fixedly connected to the upper end of the first horizontal ratch (116), wherein a first sliding hole is arranged on the second inclined plate (513) for the first vertical connecting rod (118) to slide front and back, and the first sliding hole goes through the second inclined plate (513) along the vertical direction;

a second vertical connecting rod (119), fixedly connected to the upper ends of the second horizontal ratch (117), wherein a second sliding hole is arranged on the second inclined plate (513) for the second vertical connecting rod (119) to slide front and back, and the second sliding hole goes through the second inclined plate (513) along the vertical direction;

a first coating seat (120), fixedly connected to the first vertical connecting rod (118) and being positioned at the rear side of the heat-not-burn cigarette (6) to be sealed;

a second coating seat (121), fixedly connected to the second vertical connecting rod (119) and being positioned at the front side of the heat-not-burn cigarette (6) to be sealed.

8. The sealing device of the plug end wrap paper of the heat-not-burn cigarette of claim 6, which is **characterized in that**, the pressing mechanism (2) is arranged inside the processing box (59) and right above the second inclined plate (513), and the pressing mechanism (2) is located on the left side of the coating mechanism (1), and the pressing mechanism (2) comprises:

a first horizontal pipeline (21), with its rear end fixedly connected with the back inner wall of the processing box (59);

a second horizontal pipeline (22), with its front end fixedly connected with the front inner wall of the processing box (59), wherein both the first horizontal pipeline (21) and the second horizontal pipeline (22) are used for vertically placing the plug end wrap paper (7) to be used, and the heat-not-burn cigarette (6) to be sealed is arranged between the first horizontal pipeline (21) and the second horizontal pipeline (22);

a third support (23), fixedly connected to the rear side wall of the fixed box (11);

a fourth gear (24), rotately connected to the third support (23), wherein a third driving device is arranged on the third support (23) for driving the fourth gear (24) to rotate;

a third horizontal ratch (25), slippingly connected inside the processing box (59) along the front and back direction, wherein the third horizontal ratch (25) is engaged with the lower side of the fourth gear (24);

a fourth horizontal ratch (26), slippingly connected inside the processing box (59) along the front and back direction, wherein the fourth horizontal ratch (26) is engaged with the upper side of the fourth gear (24);

a first vertical push rod (27), with its upper end fixedly connected to the lower end of the fourth horizontal ratch (26), wherein the lower end of the first vertical push rod (27) goes through the first horizontal pipeline (21), and the upper end of the first horizontal pipeline (21) is provided with a fourth sliding hole for the first vertical push rod (27) to slide front and back;

a second vertical push rod (28), with its upper end fixedly connected to the lower end of the third horizontal ratch (25), wherein the lower end of the first vertical push rod (27) goes through the second horizontal pipeline (22), and the upper end of the second horizontal pipeline (22) is provided with a fifth sliding hole for the second vertical push rod (28) to slide front and back;

the right lower part of the first housing (514) is provided with a third export (522), wherein the third export (522) is provided with a closing door capable of automatically opening and closing, and the upper end of the base (3) is fixedly connected with a first storage box (514) right under the third export (522);

a detection device is arranged on the inner wall of the first housing (514) and used for detecting the quality of the heat-not-burn cigarette (6).

9. The sealing device of the plug end wrap paper of the heat-not-burn cigarette of claim 6, which is **characterized in that**, further comprising a collecting device (8), the collecting device (8) comprises:

a conveying plate (81), with its right end rotately connected with the fourth export on the left end of the processing box (59);

a first connecting spring (82), with its both ends each fixedly connected with the right lower end of the conveying plate (81) and the left end of the processing box (59);

a first fixed housing (83) and a second fixed housing (84), wherein the upper end of the first fixed housing (83) is fixedly connected to the upper end of the base (3) and is positioned on the left side of the processing box (59), and the second fixed housing (84) is fixedly connected to the right upper end of the first fixed housing (83);

a vertical barrier (85), fixedly connected inside the first fixed housing (83), wherein the vertical barrier (85) divides the first fixed housing (83) into a first chamber (86) and a second chamber (87);

a horizontal electric stretchable rod (88), fixedly connected inside the second chamber (87);

a first moving block (89), fixedly connected to the stretchable end of the left end of the horizontal electric stretchable rod (88), wherein the first moving block (89) is slippingly connected with the inner wall of the lower end of the second chamber (87) in a left-to-right direction, and the upper end of the first moving block (89) is provided with a first inclined plane, wherein the first inclined plane is higher on the left side and lower on the right side;

a first horizontally moving rod (810), with its right end fixedly connected to the left end of the first moving block (89), wherein the left end of the first horizontally moving rod (810) slides through inside the first chamber (86);

a second moving block (811), fixedly connected to the left end of the first horizontally moving rod (810), wherein the upper end of the second moving block (811) is provided with a second inclined plane, wherein the second inclined plane is lower on the left side and higher on the right side;

a horizontal support plate (812), with its both left and right end each fixedly connected with a third moving block (813), wherein the third moving block (813) is slippingly connected with the left inner wall or the right inner wall of the first chamber (86) vertically, the upper end of the horizontal support plate (812) is fixedly connected with a vertical moving rod (828), the vertical moving rod (828) slides through the upper end of the first chamber (86), the upper end of the vertical moving rod (828) is fixedly connected with an adsorption device, a third inclined plane is arranged on the side of the third moving blocks (813) close to each other, and the height of the side of two third inclined planes close to each other is lower than the height of the side far away from each other;

an arc push block (814), fixedly connected to the lower end of the horizontal support plate (812) and is in contact with the second inclined plane;

two sets of bilaterally symmetrical limiting assemblies, each fitted with two third moving blocks (813), wherein the limiting assembly comprises: a second vertical push rod (28), going through the upper end of the first chamber (86) and slippingly connected with the upper end of the first chamber (86) in the left-to-right direction; a limiting block (816), fixedly connected to the upper end of the side of two second vertical push rods (28) close to each other; a fitting block (817), fixedly connected to the lower end of the side of two second vertical push rods (28) far away from each other, wherein an arc fitting surface is provided on the side of the fitting blocks (817) far away from each other, and the arc fitting surface is in contact fit with the third inclined plane; a second storage box (829), placed on the upper end of the base (3), wherein the limiting assembly is used for limiting the second storage box (829); a conveying plate (81), used for conveying the heat-not-burn cigarette processed by the processing box (59) to the second storage box (829);

a fourth vertical push rod (818), with its lower end going through the upper end of the second chamber (87), wherein the upper end of the fourth vertical push rod (818) goes through the upper end of the second fixed housing (84), and the lower end of the fourth vertical push rod (818) is provided with a fitting wheel (819), wherein the fitting wheel (819) is in contact fit with the first inclined plane;

a repositioning block (820), fixedly connected to the middle of the fourth vertical push rod (818);

a second connecting spring (821), surroundingly connected to the fourth vertical push rod (818), wherein both ends of the second connecting spring (821) are each fixedly connected to the repositioning block (820) and the inner wall of the lower end of the second fixed housing (84);

an auxiliary storage box (822), fixedly connected to the left part of the upper end of the second fixed housing (84);

a first slip connecting rod (823), slipping through the right side wall of the auxiliary storage box (822), wherein the left end of the first slip connecting rod (823) is fixedly connected to a drying device or a dedusting device, and the the left side wall of the auxiliary storage box (822) is provided with a through hole for the drying device or the dedusting device;

a guide block (824), fixedly connected to the right part of the upper end of the second fixed housing (84);

a second slip connecting rod (825), slipping through the guide block (824), wherein the right end of the second slip connecting rod (825) is provided with a first conductive body, and the left side of the processing box (59) is provided with a second conductive body, wherein the first conductive body and the second conductive body are in contact conduction so as to provide power supply to the drying device or the dedusting device;

a first auxiliary rod (826), with its upper end rotately connected to the upper part of the fourth vertical push rod (818), and its lower end rotately connected to the right part of the first slip connecting rod (823);

a second auxiliary rod (827), with its upper end rotately connected to the upper part of the fourth vertical push rod (818), and its lower end rotately connected to the left part of the second slip connecting rod (825).

10. A vaping device, which is **characterized in that** the vaping device comprises the plug end wrap paper of the heat-not-burn cigarette (6) of any of claims 1-4.

Fig. 1

Fig. 2

Fig. 3

Fig. 4

Fig. 5

Fig. 6

Fig. 7

Fig. 8

## INTERNATIONAL SEARCH REPORT

| International application No. |
|---|
| **PCT/CN2022/138885** |

| A. CLASSIFICATION OF SUBJECT MATTER |
|---|
| A24F40/40(2020.01)i;B32B27/06(2006.01)i;B32B9/06(2006.01)i;B32B15/12(2006.01)i;B32B15/20(2006.01)i;B32B27/10(2006.01)i;A24C5/01(2020.01)i;A24C5/46(2006.01)i |
| According to International Patent Classification (IPC) or to both national classification and IPC |

| B. FIELDS SEARCHED |
|---|
| Minimum documentation searched (classification system followed by classification symbols) |
| IPC:A24F A24C A24B B32B |
| Documentation searched other than minimum documentation to the extent that such documents are included in the fields searched |
| |
| Electronic data base consulted during the international search (name of data base and, where practicable, search terms used) |
| CNTXT; ENTXTC; ENTXT; VEN; CNKI; JPTXT: 新火智造, 加热不燃烧, 非燃烧, 低温, 烤烟, 封堵, 封端, 封盖, 封口, 封膜, 除菌, 抗菌, 抑菌, 防霉, 防水, 疏水, 防潮, 阻燃, 防燃, 烘干, 干燥, 气溶胶, non combus+, cigar+, seal, plug, stop+, antibacterial, antibiotic, antimicrobial, waterstop, waterproof+, watertight, anti-water, socket+, port+, end+, hydrophob+, dry+, rotat+ |

| C. DOCUMENTS CONSIDERED TO BE RELEVANT | | |
|---|---|---|
| Category* | Citation of document, with indication, where appropriate, of the relevant passages | Relevant to claim No. |
| PX | CN 114947211 A (XINHUO INTELLIGENT MANUFACTURING (SHENZHEN) CO., LTD.) 30 August 2022 (2022-08-30)<br>claims 1-10 | 1-10 |
| X | CN 112641135 A (XINHUO INTELLIGENT MANUFACTURING (SHENZHEN) CO., LTD.) 13 April 2021 (2021-04-13)<br>description, paragraphs [0006]-[0020] and [0086]-[0100], and figures 1-3 | 1, 3, 5, 10 |
| Y | CN 112641135 A (XINHUO INTELLIGENT MANUFACTURING (SHENZHEN) CO., LTD.) 13 April 2021 (2021-04-13)<br>description, paragraphs [0006]-[0020] and [0086]-[0100], and figures 1-3 | 2, 4, 5, 10 |
| Y | CN 210695927 U (ANHUI SANHUAN PAPER GROUP CO., LTD.) 09 June 2020 (2020-06-09)<br>description, paragraph [0015], and figures 1 and 2 | 2, 4, 5, 10 |
| A | CN 109998171 A (SHENZHEN YUYAN (ROYAL TOBACCO) INDUSTRIAL CO., LTD. et al.) 12 July 2019 (2019-07-12)<br>entire document | 1-10 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 February 2023** | **14 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/138885**

### C. DOCUMENTS CONSIDERED TO BE RELEVANT

| Category* | Citation of document, with indication, where appropriate, of the relevant passages | Relevant to claim No. |
|---|---|---|
| A | CN 108903065 A (CHINA TOBACCO ANHUI INDUSTRIAL CO., LTD.) 30 November 2018 (2018-11-30)<br>entire document | 1-10 |
| A | CN 114246361 A (CHENGDUAN HAINO INDUSTRY CO., LTD. et al.) 29 March 2022 (2022-03-29)<br>entire document | 1-10 |

**INTERNATIONAL SEARCH REPORT**
Information on patent family members

| International application No. |
| --- |
| **PCT/CN2022/138885** |

| Patent document cited in search report | | | Publication date (day/month/year) | Patent family member(s) | | | Publication date (day/month/year) |
| --- | --- | --- | --- | --- | --- | --- | --- |
| CN | 114947211 | A | 30 August 2022 | None | | | |
| CN | 112641135 | A | 13 April 2021 | None | | | |
| CN | 210695927 | U | 09 June 2020 | None | | | |
| CN | 109998171 | A | 12 July 2019 | WO | 2019214603 | A1 | 14 November 2019 |
| CN | 108903065 | A | 30 November 2018 | None | | | |
| CN | 114246361 | A | 29 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022107117773

- CN 112641135 B